# DEMANDE DE BREVET EUROPEEN

(11) **EP 3 416 087 A1**
(43) Date de publication de la demande: **19.12.2018**
(21) Numéro de dépôt: 18176712.0
(22) Date de dépôt: 08.06.2018
(51) Int. Cl.: G06F 21/79, G06F 11/14, G11C 16/10

(54) **GESTION D'ATOMICITÉ DANS UNE MÉMOIRE EEPROM**

(30) Priorité: 14.06.2017 FR 1755351
(71) Demandeur: PROTON WORLD INTERNATIONAL N.V., 1831 Diegem (BE)
(72) Inventeur: DOCQUIER, Guillaume, 4000 Liege (BE); VAN KEER, Ronny, 1560 Hoeilaart (BE)
(74) Mandataire: Cabinet Beaumont

(57) **Abrégé**

L'invention concerne un procédé de vérification du caractère atomique d'une opération de mise à jour d'une donnée (d) dans une mémoire EEPROM, comportant, lors d'une opération d'écriture de la donnée les étapes suivantes : initialiser un premier (f1) et un deuxième (f2) drapeaux à une première valeur (0) et stocker cette valeur en mémoire EEPROM ; effacer la donnée en mémoire EEPROM ; écrire une valeur de la donnée en mémoire EEPROM ; et écrire une deuxième valeur (M1) du premier drapeau et une deuxième valeur (M2) du deuxième drapeau dans la mémoire EEPROM.

## Description

### Domaine

La présente description concerne de façon générale les circuits électroniques et, plus particulièrement, les circuits exploitant une mémoire non volatile réinscriptible. La présente description vise plus particulièrement la gestion d'atomicité dans une mémoire EEPROM.

### Exposé de l'art antérieur

Les mémoires EEPROM sont utilisées, notamment dans des microcontrôleurs, pour stocker de façon non volatile des informations.

Dans certaines applications, on souhaite s'assurer que les transactions réalisées respectent un critère d'atomicité. L'atomicité d'une transaction correspond à s'assurer que des données stockées en mémoire présentent bien un état exploitable et intègre. Cela revient à s'assurer que des données en mémoire non volatile présentent un état stable (l''état avant la transaction ou l'état après la transaction concernée).

La gestion de l'atomicité des transactions est particulièrement utilisée dans des applications où une interruption de l'alimentation du circuit ou l'apparition d'une perturbation accidentelle ou volontaire peut engendrer le stockage de données dans un état les rendant soit inexploitables par la suite, soit vulnérables du point de vue de la confidentialité ou de leur intégrité. Par exemple, dans le domaine des cartes à microcircuit, on souhaite s'assurer qu'en cas d'arrachement (tearing) volontaire ou accidentel d'une carte du lecteur dans laquelle elle se trouve, les informations contenues dans une mémoire non volatile de la carte soient fiables. Dans un circuit intégrant un module de sécurité, l'équivalent de l'arrachement correspond à une coupure de l'alimentation du circuit.

Le document EP 0 630 027 décrit un procédé pour sécuriser les écritures de données sensibles dans la mémoire de stockage de données EEPROM d'une carte à mémoire, et carte à mémoire pour la mise en oeuvre de ce procédé.

Le document WO 89/10618 décrit un procédé pour empêcher que des données en train d'être écrites dans une mémoire non volatile ne soient corrompues par une coupure d'alimentation.

Le document EP 2 299 363 décrit un procédé de nivellement de l'usure dans une mémoire non volatile.

### Résumé

Il existe un besoin d'améliorer la gestion de l'atomicité dans une mémoire EEPROM.

Un mode de réalisation pallie tout ou partie des inconvénients des techniques connues.

Ainsi, un mode de réalisation prévoit un procédé de vérification du caractère atomique d'une opération de mise à jour d'une donnée dans une mémoire EEPROM, comportant, lors d'une opération d'écriture de la donnée les étapes suivantes :
initialiser un premier drapeau et un deuxième drapeau à une première valeur et stocker cette valeur en mémoire EEPROM ;
effacer la donnée en mémoire EEPROM ;
écrire une valeur de la donnée en mémoire EEPROM ; et
écrire une deuxième valeur du premier drapeau et une deuxième valeur du deuxième drapeau dans la mémoire EEPROM.

Selon un mode de réalisation, lors d'une opération de lecture de la donnée, la valeur de la donnée n'est retournée que si la valeur du premier drapeau correspond à la deuxième valeur.

Selon un mode de réalisation, lors d'une opération de lecture de la donnée, on effectue les opérations suivantes :
comparer la valeur du premier drapeau à la deuxième valeur ; et
si les valeurs sont différentes, retourner une erreur ; ou
si les valeurs sont égales, comparer la valeur du deuxième drapeau à la deuxième valeur de celui-ci puis retourner la valeur de la donnée.

Selon un mode de réalisation, si la valeur du premier drapeau ne correspond pas à la deuxième valeur, la donnée est effacée en mémoire EEPROM.

Selon un mode de réalisation, si la valeur du premier drapeau ne correspond pas à la deuxième valeur, la valeur des deux drapeaux est mise à jour avec la première valeur en mémoire EEPROM.

Selon un mode de réalisation, la première valeur correspond à un effacement.

Selon un mode de réalisation, les premier et deuxième drapeaux sont mis à jour et lus successivement.

Selon un mode de réalisation, si la valeur du deuxième drapeau ne correspond pas à la deuxième valeur, les valeurs des premier et deuxième drapeaux sont mises à jour avec leur deuxième valeur respective en mémoire EEPROM.

Un mode de réalisation concerne un circuit électronique comportant une mémoire EEPROM, et un processeur adapté à la mise en oeuvre du procédé de vérification du caractère atomique d'une opération de mise à jour d'une donnée dans la mémoire EEPROM.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une représentation très schématique et sous forme de blocs d'un exemple de circuit électronique du type auquel s'appliquent des modes de réalisation qui vont être décrits ;
la figure 2 représente, de façon schématique et sous forme de blocs, les étapes de mise à jour d'une donnée en mettant en oeuvre un exemple de procédé de gestion d'atomicité ;
la figure 3 représente, de façon schématique et sous forme de blocs, les étapes d'un exemple de procédé de lecture d'une donnée écrite en mettant en oeuvre le procédé de gestion d'atomicité de la figure 2 ;
la figure 4 représente, de façon schématique et sous forme de blocs, les étapes de mise à jour d'une donnée en mettant en oeuvre un mode de réalisation d'un procédé de gestion d'atomicité ; et
la figure 5 représente, de façon schématique et sous forme de blocs, les étapes d'un mode de réalisation d'un procédé de lecture d'une donnée écrite en mettant en oeuvre le procédé de gestion d'atomicité de la figure 4.

### Description détaillée

De mêmes éléments ont été désignés par de mêmes références aux différentes figures.

Par souci de clarté, seules les étapes et éléments utiles à la compréhension des modes de réalisation qui vont être décrits ont été représentés et seront détaillés. En particulier, la destination des informations traitées par le mécanisme d'atomicité n'a pas été détaillée, les modes de réalisation décrits étant compatibles avec les applications usuelles requérant un traitement d'atomicité.

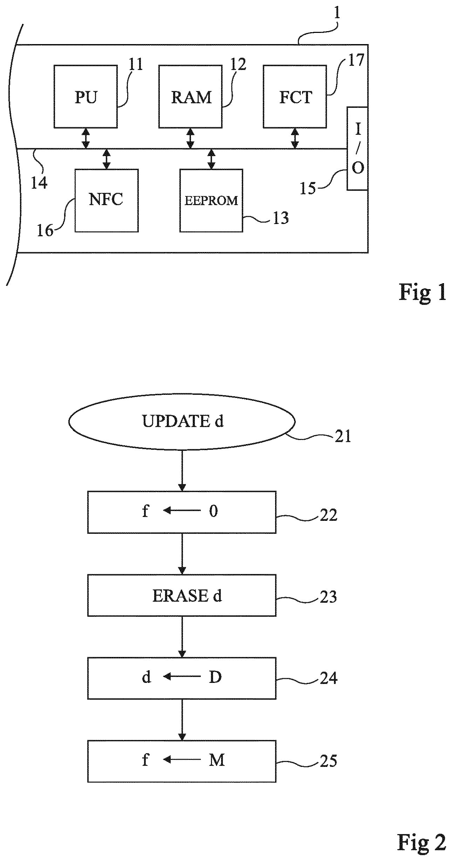

La figure 1 représente, de façon très schématique et sous forme de blocs, un mode de réalisation d'un circuit électronique 1 du type auquel d'appliquent, à titre d'exemple, les modes de réalisation qui vont être décrits.

Le circuit 1 comporte :
une unité de traitement 11 (PU), par exemple une machine d'états, un microprocesseur, un circuit logique programmable, etc. ;
une ou plusieurs zones 12 (RAM) de stockage volatil, par exemple de type mémoire vive ou registres, pour stocker temporairement des informations (instructions, adresses, données) pendant les traitements ;
une ou plusieurs zones de stockage non volatil, dont au moins une mémoire 13 de type mémoire effaçable et programmable électriquement (EEPROM) pour stocker des informations de façon durable et en particulier quand le circuit n'est pas alimenté ;
un ou plusieurs bus 14 de données, d'adresses et/ou de commandes entre les différents éléments internes au circuit 1 ; et
une interface d'entrée-sortie 15 (I/O) de communication, par exemple de type bus série, avec l'extérieur du circuit 1.

Le cas échéant, le circuit 1 intègre également un circuit 16 de communication sans contact (CLF - ContactLess Front-end), de type communication en champ proche (Near Field Communication - NFC).

Par ailleurs, le circuit 1 peut intégrer d'autres fonctions, symbolisées par un bloc 17 (FCT), selon l'application, par exemple, un crypto-processeur, d'autres interfaces, d'autres mémoires, etc.

Afin de garantir l'atomicité des transactions, le stockage en mémoire EEPROM d'une donnée ne doit être considéré comme valide qu'une fois que la transaction est terminée et que les données sont dites stables. En pratique, les procédés de gestion d'atomicité activent un indicateur de traitement d'une donnée lorsque celle-ci est extraite de la mémoire non volatile, puis organisent le stockage de la donnée mise à jour une fois le traitement terminé, l'indicateur de traitement changeant alors d'état. L'atomicité peut concerner une quantité plus ou moins importante de données selon la nature de la transaction.

Le caractère atomique des transactions est particulièrement important dans le cas de transactions de type bancaire (paiement par exemple) où il est nécessaire de s'assurer que l'information stockée dans la mémoire EEPROM, par exemple le solde d'un porte-monnaie électronique ou d'une autorisation d'achat, ou l'identifiant validant une transaction, est stockée de façon fiable.

Généralement pour garantir l'atomicité d'une transaction, on utilise des espaces de stockage temporaire (Buffer) d'atomicité qui sont mis à jour en mémoire non volatile avec les informations initiales, puis finales, pour transfert dans la mémoire non volatile principale.

La gestion de l'atomicité des transactions dans un circuit équipé d'une mémoire EEPROM s'effectue généralement sur deux états, c'est-à-dire que les algorithmes de vérification d'atomicité sont capables de restituer une donnée de la mémoire dans un état stable, correspondant à l'état initial ou à l'état final. Toutefois, la mise en oeuvre de ces sécurités requiert une place importante en mémoire et des algorithmes complexes de récupération qui ne sont pas toujours justifiés. De plus, dans le cas d'une mémoire EEPROM, les multiples écritures d'une donnée nuisent à l'endurance de la mémoire et à la consommation.

Les modes de réalisation qui sont décrits ci-dessous prévoient un algorithme d'atomicité à trois états, c'est-à-dire capable d'indiquer si la donnée lue est :
- dans un état stable, c'est-à-dire :
   ∘ dans l'état initial, c'est-à-dire qu'elle n'a pas été affectée par l'opération au cours de laquelle a eu lieu la coupure et qu'elle est donc dans un état stable ; ou
   ∘ dans l'état final, c'est-à-dire que la donnée a été modifiée par l'opération sans qu'il y ait coupure ou avant qu'une coupure ait lieu et qu'elle est donc également dans un état stable ; ou
- dans un état indéterminé ou « perdu », c'est-à-dire que la donnée ne peut être restituée dans un état correspondant à l'état initial ou à l'état final.

Le fait de prévoir un état indéterminé ou « non fiable » permet de simplifier les contraintes en termes de durée d'exécution des processus et de réduire le nombre de mises à jour requises de la mémoire.

Cet aspect est particulièrement important dans le cas d'une mémoire EEPROM dont l'endurance (la durée de vie) et la consommation sont fortement dépendantes du nombre d'écritures. Ce problème ne se pose pas nécessairement pour d'autres types de mémoires qui consomment moins dans les opérations d'écritures (une mémoire de type EEPROM nécessite une tension d'écriture de plus de dix volts) ou dont l'endurance est moins critique.

Selon les modes de réalisation décrits, on prévoit deux drapeaux ou témoins d'atomicité d'un ou plusieurs bits (par exemple un octet) dont la taille est indépendante de la taille des données à protéger. Ainsi, on n'a pas besoin de dupliquer les opérations, ni la taille de l'espace mémoire, ni de dupliquer la donnée avant sa mise à jour par l'opération dont on souhaite surveiller le caractère atomique.

La figure 2 représente, de façon schématique et sous forme de blocs, les étapes de mise à jour d'une donnée en mettant en oeuvre un exemple de procédé de gestion d'atomicité.

Selon cet exemple, la gestion de l'atomicité requiert un mot (par exemple d'un bit ou d'un octet) servant de drapeau, ou témoin, d'atomicité qui doit être stocké en mémoire non volatile.

Les étapes qui sont décrites ci-dessous ne concernent que la mise à jour en mémoire EEPROM qui constitue la phase sensible du point de vue de l'atomicité. En effet, toute manipulation de la donnée avant ou après cette écriture de mise à jour utilise la valeur de celle-ci stockée dans des registres ou en mémoire volatile et, en cas de coupure d'alimentation, la donnée en mémoire non volatile reste fiable car cette coupure n'intervient pas lors de l'opération en mémoire non volatile.

A chaque mise à jour (bloc 21, UPDATE d) d'une donnée dont la valeur D est stockée en mémoire EEPROM, on commence (bloc 22, f <- 0) par initialiser le mot f servant de drapeau en mémoire non volatile à une valeur connue (par exemple 0, ou M). Si la valeur connue est 0, en fait cela revient à une opération d'effacement du mot f.

Puis, on efface, dans la mémoire non volatile, le mot d de donnée à mettre à jour (bloc 23, ERASE d).

On effectue alors l'écriture (bloc 24, d <- D) de la nouvelle valeur D du mot d dans son emplacement mémoire.

Enfin, on écrit (bloc 25, f <- M) une valeur connue (par exemple M), différente de la valeur d'initialisation utilisée à l'étape 22 dans le mot de drapeau f.

Pour que l'on puisse considérer que l'on respecte une gestion d'atomicité à trois états, il faut que quel que soit l'instant auquel se produit une coupure de l'alimentation, on soit capable, lors de la lecture de la donnée d, de déterminer si elle est ou non fiable.

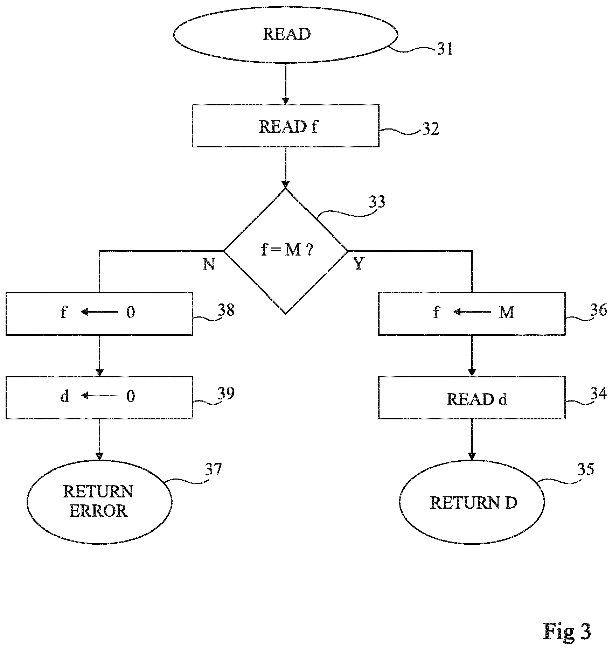

La figure 3 représente, de façon schématique et sous forme de blocs, les étapes d'un exemple de procédé de lecture d'une donnée écrite en mettant en oeuvre le procédé de gestion d'atomicité de la figure 2.

A chaque lecture (bloc 31, READ) du mot de donnée d, on commence par lire (bloc 32, READ f) la valeur du drapeau f.

On compare ensuite (bloc 33, f = M ?) cette valeur à la valeur attendue correspondant à la valeur connue (par exemple M), stockée lors de l'étape 25 de fin d'écriture.

Si le test 33 est positif (sortie Y du bloc 33), cela signifie que la donnée d est stable. On peut alors lire (bloc 34, READ d) la donnée d et on retourne la valeur D (bloc 35, RETURN D) . De préférence, l'étape 34 est précédée d'une étape (bloc 36, f <- M) de confirmation de la valeur M dans le drapeau f.

L'ordre des étapes 33 et 34 n'a pas d'importance. De même, l'étape 36 peut intervenir après l'étape 34.

Si le drapeau f ne vaut pas la valeur attendue M (sortie N du bloc 33), cela signifie que la donnée d est instable et le processus de lecture retourne une erreur (bloc 37, RETURN ERROR). De préférence, l'étape 37 est précédée d'étapes (bloc 38, f <- 0 et bloc 39, d <- 0) de confirmation de la valeur d'initialisation (0) du drapeau et d'effacement de la donnée d. De préférence, afin de détecter une éventuelle double coupure (double-tearing), l'étape 38 est effectuée avant l'étape 39. Ainsi, si l'étape 39 est effectuée avant l'étape 38, on pourrait trouver une situation dans laquelle un contenu de f instable (non fiable) orienterait (test 33) l'algorithme une première fois vers les étapes 39 et 38. Si la donnée d est confirmée à 0 avant d'avoir confirmé le drapeau f à 0 et qu'une deuxième coupure intervient, la valeur de f pourrait se trouver accidentellement avec la valeur M et passer alors positivement le test 33 suivant. Cela confirmerait alors la donnée d comme fiable, ce qui n'est pas le cas.

L'étape 38 de confirmation de la valeur du drapeau f à la valeur 0 sert à éviter une fausse première lecture. En effet, en l'absence de confirmation, on pourrait rencontrer la situation d'un drapeau f instable qui serait lu alternativement à la valeur M et à une valeur différente de M. La confirmation sert donc à éviter que deux lectures successives ne donnent des résultats différents. L'étape d'effacement 39 de la donnée d garantit qu'une lecture ultérieure fournisse quelque chose d'inexploitable.

On voit donc que, dès qu'une coupure d'alimentation ou qu'un problème dans les étapes d'écriture (figure 2) se produit, le résultat d'une lecture ultérieure retourne une erreur.

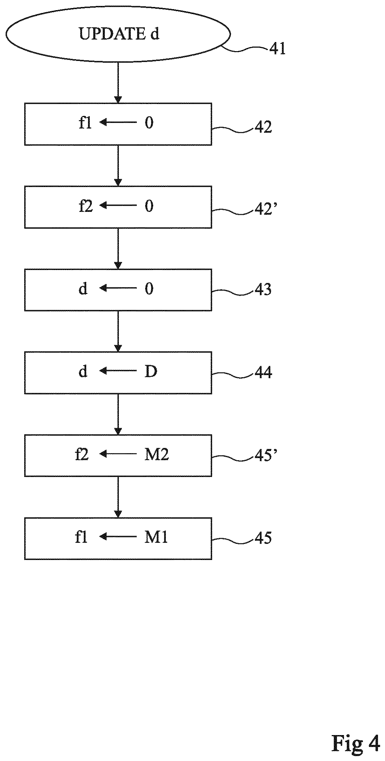

La figure 4 représente, de façon schématique et sous forme de blocs, les étapes de mise à jour d'une donnée en mettant en oeuvre un mode de réalisation d'un procédé de gestion d'atomicité.

Par rapport à l'exemple de la figure 2, on utilise deux drapeaux f1 et f2 stockés en mémoire non volatile.

Ainsi, à chaque mise à jour (bloc 41, UPDATE d) d'une donnée dont la valeur D est stockée en mémoire EEPROM, on commence (bloc 42, f1 <- 0) par initialiser un premier mot f1 servant de drapeau en mémoire non volatile à une valeur connue (par exemple 0) et (bloc 42', f2 <-0) un deuxième mot f2 servant également de drapeau en mémoire non volatile à une valeur connue (par exemple 0) .

Puis, on efface, dans la mémoire non volatile, le mot d de donnée à mettre à jour (bloc 43, d <- 0).

On effectue alors l'écriture (bloc 44, d <- D) de la nouvelle valeur D du mot d dans son emplacement mémoire.

Enfin, on écrit (bloc 45', f2 <- M2 et bloc 45, f1 <- M1) des valeurs connues (par exemple M2 et M1), différentes de la valeur d'initialisation (0) utilisée à l'étape 42 dans les mots de drapeau f1 et f2. De préférence, l'écriture des drapeaux aux étapes 45' et 45 s'effectue dans l'ordre inverse par rapport à leur initialisation des étapes 42 et 42'.

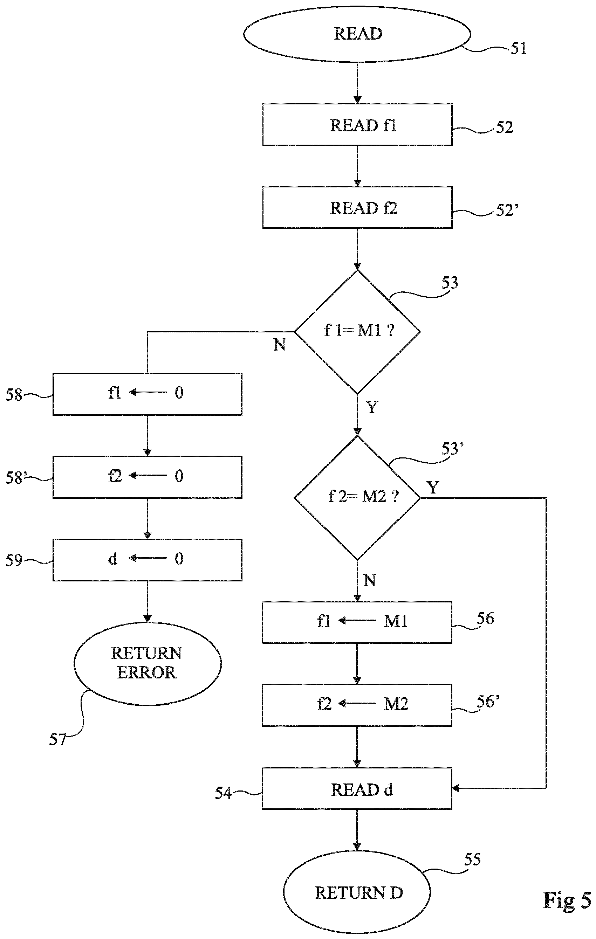

La figure 5 représente, de façon schématique et sous forme de blocs, les étapes d'un mode de réalisation d'un procédé de lecture d'une donnée écrite en mettant en oeuvre le procédé de gestion d'atomicité de la figure 4.

A chaque lecture (bloc 51, READ) du mot de donnée d, on commence par lire (bloc 52, READ f1 ; bloc 52', READ f2) les valeurs respectives des drapeaux f1 et f2.

On compare ensuite (bloc 53, f1 = M1 ?) la valeur du premier drapeau f1 à la valeur attendue correspondant à la valeur connue (par exemple M1), stockée lors de l'étape 45 de fin d'écriture.

Si le drapeau f1 ne vaut pas la valeur attendue M1 (sortie N du bloc 53), alors cela signifie que la donnée d est instable et le processus de lecture retourne une erreur (bloc 57, RETURN ERROR). De préférence, l'étape 57 est précédée d'étapes (bloc 58, f1 <- 0 ; bloc 58', f2 <- 0 ; bloc 59, d <- 0) de confirmation de la valeur d'initialisation (0) des drapeaux f1 et f2 et d'effacement de la donnée d. Comme pour le mode de réalisation de la figure 3, on effectue de préférence les étapes (58 et 58') de confirmation des drapeaux à la valeur d'initialisation (0) avant d'effacer (59) la donnée pour détecter une double interruption et éviter ainsi de valider, lors d'une deuxième lecture, une fausse première lecture.

L'étape d'effacement 59 de la donnée d garantit qu'une lecture ultérieure fournisse quelque chose d'inexploitable.

Si le test 53 confirme que le drapeau f1 a la valeur correcte (sortie Y du bloc 53), on compare alors (bloc 53', f = M2 ?) la valeur du drapeau f2 à la valeur attendue correspondant à la valeur connue (par exemple M2), stockée lors de l'étape 45' de fin d'écriture.

Si le test 53' est positif (sortie Y du bloc 53'), donc que les deux tests 53 et 53' sont successivement positifs, cela signifie que la donnée d est stable. On peut alors lire (bloc 54, READ d) la donnée d et on retourne la valeur D (bloc 55, RETURN D) . Une différence par rapport au mode de réalisation de la figure 3 est que la donnée d est lue sans qu'il soit requis de confirmer les valeurs des drapeaux.

Si le test 53' est négatif (sortie N du bloc 53'), cela signifie qu'il faut reconfirmer la valeur des drapeaux. On effectue alors des étapes (bloc 56, f1 <- M1 ; bloc 56', f2 <- M2) de confirmation des valeurs M1 et M2 dans les drapeaux respectifs f1 et f2, avant de lire la donnée d (bloc 54) et de retourner la valeur D (bloc 55) .

Un avantage du mode de réalisation des figures 4 et 5 est qu'il évite en cas de confirmation d'atomicité, qui est le cas le plus fréquent, de devoir confirmer les valeurs des drapeaux systématiquement. Ces valeurs ne sont confirmées que si on s'aperçoit que le deuxième drapeau f2 est faux alors que le premier drapeau f1 confirme que la donnée est fiable. On économise ainsi une écriture qui est gourmande en énergie et en temps.

L'ordre des étapes 52, 52' peut être inversé. Par ailleurs, on peut commencer par effectuer les étapes 52 et 53, puis effectuer les étapes 52' et 53' en cas de test 53 positif. Par ailleurs, l'étape 54 peut intervenir avant les étapes 56 et 56' ou être intercalée entre celles-ci.

Ici également, on voit que, dès qu'une coupure d'alimentation ou qu'un problème dans les étapes d'écriture (figure 4) se produit, le résultat d'une lecture ultérieure retourne une erreur.

Les valeurs M1 et M2 peuvent être identiques ou différentes l'une de l'autre.

La ou les valeurs déterminées ou connues (M1 et M2) nécessaires pour confirmer l'atomicité peuvent être quelconque, pourvu d'être différentes de la valeur d'initialisation.

Le choix d'une valeur nulle (0) comme valeur d'initialisation du ou des drapeaux présente l'avantage de représenter un effacement. Ainsi, tant qu'une écriture n'a pas été effectuée ou en cas de donnée instable, les drapeaux sont simplement des cellules mémoire vierges.

Les drapeaux f1 et f2 n'ont pas besoin d'être de grande taille. Par exemple, un bit suffit. Toutefois, selon un mode de réalisation préféré, on choisira une taille correspondant à la granularité d'écriture de la mémoire EEPROM, par exemple un octet. Un avantage est que cela renforce la fiabilité des drapeaux sans coût supplémentaire pour l'écriture. Par exemple, on peut prévoir d'utiliser certains bits de l'octet pour associer, au ou aux drapeaux, un code correcteur d'erreur. Dans le mode de réalisation des figures 4 et 5, on pourra prévoir que chaque drapeau soit d'un demi-octet afin d'économiser une étape d'écriture (de confirmation) à chaque lecture.

Les drapeaux f1 et f2 peuvent être stockés dans la mémoire EEPROM indépendamment de la donnée d, c'est-à-dire pas nécessairement dans la même page mémoire.

Dans les modes de réalisation décrits, on accepte de perdre la donnée en cas de coupure, c'est-à-dire si l'on s'aperçoit que la donnée n'est pas stable.

Un avantage des modes de réalisation décrits est qu'ils évitent de devoir dupliquer la valeur initiale afin de la récupérer comme c'est le cas dans un processus à deux états. Cela économise une écriture en mémoire non volatile de la donnée, ce qui représente un gain en termes d'énergie et d'endurance de la mémoire EEPROM, notamment pour des données de taille importante.

Le procédé de vérification d'atomicité n'est pas nécessairement mis en oeuvre pour toutes les données stockées dans la mémoire EEPROM. De préférence, il n'est mis en oeuvre que pour les données pour lesquelles on souhaite garantir de connaitre l'état stable ou non de la donnée à chaque lecture.

Divers modes de réalisation ont été décrits. Diverses variantes et modifications apparaîtront à l'homme de l'art. Par ailleurs, la mise en oeuvre pratique des modes de réalisation qui ont été décrits est à la portée de l'homme du métier à partir des indications fonctionnelles données ci-dessus et en utilisant des circuits en eux-mêmes usuels. Notamment, l'organisation de l'adressage de la mémoire et la génération des signaux adaptés à sa commande et à cet adressage fait appel à des techniques en elles-mêmes usuelles.

En particulier, les étapes 23 (ou 43) et 24 (ou 44), correspondant aux étapes d'effacement et d'écriture de la donnée, peuvent ne pas être successives et être séparées d'étapes de traitement ou d'opérations liées à l'algorithme exploitant cette donnée. Ces étapes seront protégées en ce sens qu'en cas de coupure de l'alimentation après l'étape d'effacement, la données d sera considérée comme instable jusqu'à la prochaine écriture et surtout sera inexploitable car effacée.

## Revendications

1. Procédé de vérification du caractère atomique d'une opération de mise à jour d'une donnée (d) dans une mémoire EEPROM, comportant, lors d'une opération d'écriture de la donnée les étapes suivantes :
initialiser un premier drapeau (f1) et un deuxième drapeau (f2) à une première valeur (0) et stocker cette valeur en mémoire EEPROM ;
effacer la donnée en mémoire EEPROM ;
écrire une valeur de la donnée en mémoire EEPROM ; et
écrire une deuxième valeur (M1) du premier drapeau et une deuxième valeur (M2) du deuxième drapeau dans la mémoire EEPROM.

2. Procédé selon la revendication 1, dans lequel, lors d'une opération de lecture de la donnée (d), la valeur de la donnée n'est retournée que si la valeur du premier drapeau (f1) correspond à la deuxième valeur.

3. Procédé selon la revendication 2, comportant, lors d'une opération de lecture de la donnée (d), les opérations suivantes :
comparer la valeur du premier drapeau (f1) à la deuxième valeur (M1) ; et
si les valeurs sont différentes, retourner une erreur ; ou
si les valeurs sont égales, comparer la valeur du deuxième drapeau (f2) à la deuxième valeur de celui-ci (M2) puis retourner la valeur de la donnée.

4. Procédé selon l'une quelconque des revendications 1 à 3, dans lequel, si la valeur du premier drapeau (f1) ne correspond pas à la deuxième valeur, la donnée (d) est effacée en mémoire EEPROM.

5. Procédé selon l'une quelconque des revendications 1 à 4, dans lequel si la valeur du premier drapeau (f1) ne correspond pas à la deuxième valeur, la valeur des deux drapeaux (f1, f2) est mise à jour avec la première valeur (0) en mémoire EEPROM.

6. Procédé selon l'une quelconque des revendications 1 à 5, dans lequel la première valeur (0) correspond à un effacement.

7. Procédé selon l'une quelconque des revendications 1 à 6, dans lequel les premier (f1) et deuxième (f2) drapeaux sont mis à jour et lus successivement.

8. Procédé selon l'une quelconque des revendications 1 à 7, dans lequel si la valeur du deuxième drapeau (f2) ne correspond pas à la deuxième valeur (M2), les valeurs des premier et deuxième drapeaux sont mises à jour avec leur deuxième valeur respective en mémoire EEPROM.

9. Circuit électronique comportant une mémoire EEPROM (13), et un processeur (11) adapté à la mise en oeuvre du procédé selon l'une quelconque des revendications 1 à 8.
